# EUROPÄISCHE PATENTSCHRIFT

(11) **EP 1 166 513 B1**
(45) Veröffentlichungstag und Bekanntmachung des Hinweises auf die Patenterteilung: **02.07.2003**
(21) Anmeldenummer: 00936625.3
(22) Anmeldetag: 13.04.2000
(51) Int. Cl.: H04L 25/10, H04Q 11/04

(54) **VERFAHREN UND VORRICHTUNG ZUM ÜBERTRAGEN EINES SENDESIGNALS ÜBER EINE ZWEIADRIGE LEITUNG**
METHOD AND DEVICE FOR TRANSMITTING A TRANSMISSION SIGNAL VIA A TWO-CORE LINE
PROCEDE ET DISPOSITIF POUR LA TRANSMISSION PAR L'INTERMEDIAIRE D'UNE LIGNE A DEUX CONDUCTEURS D'UN SIGNAL EMIS

(30) Priorität: 13.04.1999 DE 19916635
(43) Veröffentlichungstag der Anmeldung: 02.01.2002
(73) Patentinhaber: Infineon Technologies AG, 81669 München (DE)
(72) Erfinder: HEISE, Bernd, D-81825 München (DE)
(74) Vertreter: Banzer, Hans-Jörg, Dipl.-Ing.
(86) Internationale Anmeldenummer: DE0001158
(87) Internationale Veröffentlichungsnummer: WO00062439

(56) Entgegenhaltungen:
- US-A- 4 588 858
- US-A- 5 696 777
- ROESSLER B ET AL: "CMOS ANALOG FRONT END OF A TRANSCEIVER WITH DIGITAL ECHO CANCELLATION FOR ISDN" IEEE JOURNAL OF SOLID-STATE CIRCUITS, Bd. 23, Nr. 2, April 1988 (1988-04), Seiten 311-317, XP000759237 NEW YORK, USA ISSN: 0018-9200

## Beschreibung

Die vorliegende Erfindung betrifft ein Verfahren und eine Vorrichtung zum Übertragen eines Sendesignals über eine zweiadrige Leitung, insbesondere über eine zweiadrige Telefonleitung, nach dem Oberbegriff des Anspruches 1 bzw. nach dem Oberbegriff des Anspruches 8.

Zum Übertragen eines Sendesignals über eine nachfolgend der Einfachheit halber als Telefonleitung bezeichnete Telefon-Teilnehmerschleife bzw. zum Empfangen eines Empfangssignals von der Telefonleitung ist eine transformator- oder übertragerlose Schaltungsanordnung bekannt, welche im wesentlichen zwei identisch aufgebaute Sende- und Empfangseinrichtungen sowie eine die Sende- und Empfangseinrichtungen ansteuernde Steuereinrichtung aufweist. Jeder dieser Bausteine ist insbesondere als separater Chip ausgestaltet. Mit Hilfe der Sende- und Empfangseinrichtungen werden einerseits der Telefonleitung Sendesignale aufgeprägt und andererseits Empfangssignale ausgekoppelt. Jede Sendeund Empfangseinrichtung ist mit einer Leitungsader der Telefonleitung verbunden. Die beiden Sende- und Empfangseinrichtungen werden mit unterschiedlichen Versorgungsspannungen betrieben. Die Steuereinrichtung steuert die beiden Sende- und Empfangseinrichtungen derart an, daß von den Sende- und Empfangseinrichtungen gewünschte Sendesignale über die Telefonleitung abgesetzt werden. Dabei erzeugt jede Sende- und Empfangseinrichtung ein Teilsignal des gewünschten Sende- oder Übertragungssignals, wobei das Sendesignal durch die wechselstrommäßige Differenz der beiden Teilsignale gebildet wird, was durch eine entsprechende Ansteuerung der beiden Sende- und Empfangseinrichtungen durch die zentrale Steuereinrichtung erzielt wird.

Die oben beschriebene gattungsgemäße Schaltungsanordnung eignet sich insbesondere für den Anschluß an ISDN-Telefonleitungen (Integrated Services Digital Network).

Die beiden Sende- und Empfangseinrichtungen treiben die mit ihnen verbundenen Adern der Übertragungsleitung über einen Serienwiderstand, wobei die beiden Serienwiderstände die Impedanz der Übertragungsleitung nachbilden und gleich groß sind.

Von internationalen Standards wird gefordert, die Gleichtaktanteile des Sendesignals aus Gründen der elektromagnetischen Abstrahlung zu begrenzen. So wird beispielsweise in der Druckschrift ETSI Technical Report ETR 080, September 1995, European Telecommunications Standards Institute, Sophia-Antipolis, France, eine Testschaltung zur Überwachung der Longitudinalkomponente des Sendesignals festgelegt, wobei die Longitudinalkomponente des Sendesignals im Frequenzbereich 100 Hz bis 150 kHz gemittelt über jeweils eine Zeitspanne von 1 s lediglich einen Spannungseffektivwert kleiner als -50 dBV aufweisen darf.

Im Idealfall sollten die über die beiden Adern übertragenen Teilsignale betragsmäßig gleich groß, jedoch zueinander entgegengesetzt sein.

Um die oben erwähnten Anforderungen erfüllen zu können, dürfen die Widerstandswerte der mit den Ausgängen der beiden Sende- und Empfangseinrichtungen verbundenen Serienwiderstände bei exakt gleichem Ausgangspegel um maximal 2,5% abweichen. Andererseits dürfen die Ausgangspegel bei exakt gleicher Beschaltung, d.h. bei exakt gleichen Widerstandswerten der Serienwiderstände, um maximal 0,5% abweichen. Dies kann jedoch in Halbleiterschaltungen nicht mit einem vertretbaren Aufwand realisiert werden.

In älteren Schaltungen wurden Gleichtaktanteile durch Verwendung eines Übertragers oder Transformators unterdrückt. Ebenso sind Lösungen für Schaltungen bekannt, bei denen die Signale gemeinsam auf einem Baustein, d.h. auf einem Chip, erzeugt werden, wobei in diesem Fall eine Abstimmung der Ausgangssignale durch eine entsprechende symmetrische Auslegung der Schaltung möglich ist.

Für Schaltungen der eingangs beschriebenen Art, bei denen die Teilsignale auf getrennten Chips erzeugt werden, ist jedoch noch keine Lösung bekannt.

Der vorliegenden Erfindung liegt daher die Aufgabe zugrunde, ein Verfahren und eine übertragerlose Vorrichtung zum Übertragen eines Sendesignals über eine zweiadrige Leitung, insbesondere eine zweiadrige Telefonleitung, bereitzustellen, wobei Gleichtaktanteile in dem Sende- oder Übertragungssignal unterdrückt werden können. Insbesondere soll die Erfindung auch auf Schaltungen anwendbar sein, bei denen das Sendesignal von zwei getrennten Bausteinen, d.h. auf getrennten Chips, erzeugt wird.

Die oben genannte Aufgabe wird erfindungsgemäß durch ein Verfahren mit den Merkmalen des Anspruches 1 bzw. eine Vorrichtung mit den Merkmalen des Anspruches 8 gelöst. Die Unteransprüche beschreiben jeweils bevorzugte und vorteilhafte Ausführungsformen der vorliegenden Erfindung.

Erfindungsgemäß wird eine Kalibrierung der die Teilsignale erzeugenden Sendeeinrichtungen derart durchgeführt, daß ihre Ausgänge, welche jeweils mit einer Ader der Übertragungsleitung verbunden sind, aufeinander kalibiriert werden, um ihre Ausgangspegel aneinander anzupassen.

Dabei kann die Kalibrierung in zwei Schritten ablaufen. Während eines ersten Schritts wird die fertigungsbedingte relative Abweichung zwischen den unterschiedlichen Umsetzoder Wandlerverhältnissen der in jedem Baustein bzw. Chip enthaltenen Analog/Digital-Wandler durchgeführt, um diese nachfolgend bei der eigentlichen Kalibrierung berücksichtigen zu können. Während eines zweiten Schritts werden dann über die Analog/Digital-Wandler die einzelnen Ausgangspegel gemessen, miteinander verglichen und derart justiert, daß sie im Rahmen der Meßgenauigkeit übereinstimmen.

Zu diesem Zweck kann insbesondere nach dem Vergleich der Ausgangspegel einem der beiden Bausteine ein Korrekturwert zugeführt werden, der anschließend in dem entsprechenden Baustein zur Korrektur einer zur Erzeugung des Ausgangspegels des entsprechenden Teilsignals verwendeten Referenzspannung herangezogen wird.

Um die Übereinstimmung der Ausgangspegel weiter zu verbessern, kann die zuvor beschriebene Kalibrierung wiederholt durchgeführt werden.

Die vorliegende Erfindung ermöglicht somit eine wechselstrommäßige Kalibrierung der von den beiden Bausteinen abgegebenen Ausgangspegel, obwohl diese spannungsmäßig auf völlig unterschiedlichen Potentialen liegen, wobei zu diesem Zweck kein Gleichstromfluß über diesen hohen Potentialunterschied erforderlich ist.

Die Erfindung eignet sich besonders für den Einsatz an ISDN-Telefonleitungen (Integrated Services Digital Network). Die Erfindung kann jedoch allgemein überall dort eingesetzt werden, wo an eine Übertragungs- oder Kupferleitung eine hohe Fernspeisespannung angelegt werden soll und zugleich ohne Verwendung eines Übertragers Sendesignale auf die Übertragungsleitung gegeben und die über die beiden Adern der Übertragungsleitung fließenden Teilsignale mit hoher Genauigkeit zwar gleich groß, jedoch zueinander invers sein sollen. Dies gilt beispielsweise für die folgenden Signalübertragungsverfahren: 2B1Q-Codierung , 4B3T-Codierung, Up0, MDSL (Multirate Digital Subscriber Line), HDSL (High Bit Rate Digital Subscriber Line), SDSL (Single Pair Of Symmetric Digital Suibscriber Line), VDSL (Very High Bit Rate Digital Subscriber Line) und ADSL (Asynchronous Digital Subscriber Line).

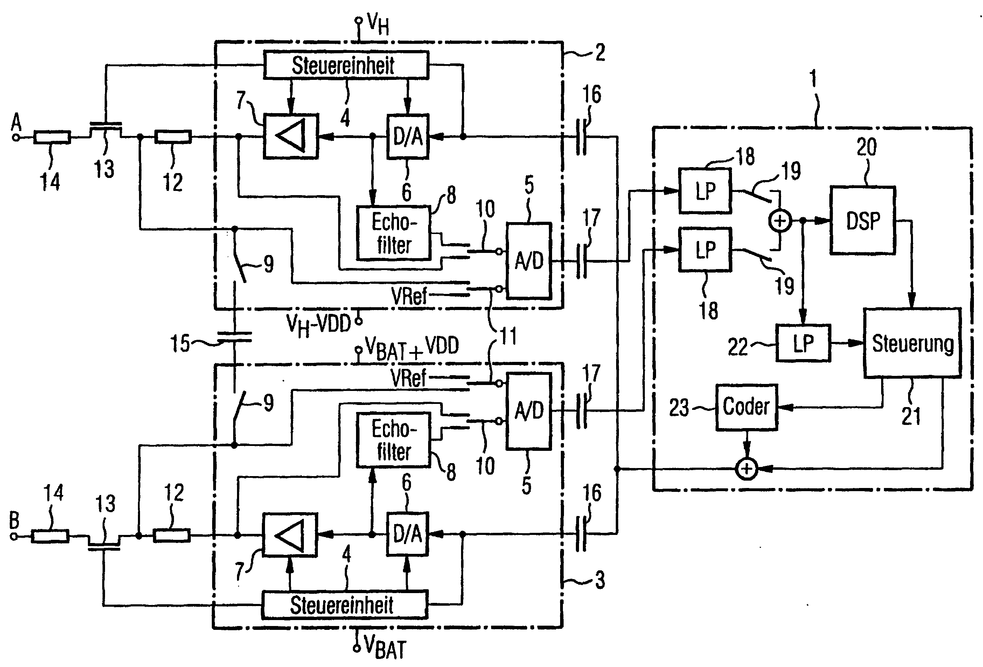

Die vorliegende Erfindung wird nachfolgend unter Bezugnahme auf die einzige Figur anhand eines bevorzugten Ausführungsbeispiels erläutert. Dabei zeigt Fig. 1 ein schematisches Blockschaltbild dieses bevorzugten Ausführungsbeispiels einer erfindungsgemäßen Vorrichtung.

Die in Fig. 1 gezeigte Vorrichtung umfaßt zwei Sende- und Empfangseinrichtungen 2 und 3, welche als separate Chip-Bausteine ausgestaltet sind, sowie eine Steuereinrichtung 1 zum Ansteuern der beiden Sende- und Empfangseinrichtungen 2, 3.

Die beiden Sende- und Empfangseinrichtungen liegen auf unterschiedlichen Spannungsniveaus. Die Sende- und Empfangseinrichtung 2 besitzt Versorgungsspannungsanschlüsse V_{H} und V_{H}-VDD, während die Sende- und Empfangseinrichtung 3 Versorgungsspannungsanschlüsse V_{BAT}+VDD und V_{BAT} aufweist. Die an den Sende- und Empfangseinrichtungen 2 und 3 anliegende Spannungsdifferenz ist in beiden Fällen VDD, wobei VDD bis zu 6V beträgt und somit im Bereich üblicher Versorgungsspannungen für CMOS-Halbleiterbauelemente liegt. Die Spannungsdifferenz zwischen V_{H} und V_{BAT} beträgt etwa 110V. Jede Sende- und Empfangseinrichtung 2, 3 weist einen nachfolgend noch näher erläuterten Ausgangspuffer oder Ausgangstreiber 7 auf, über den jeweils Sendesignale auf eine entsprechende Leitungsader einer Übertragungsleitung eingespeist werden. Der Ausgangspuffer 7 der Sende- und Empfangseinrichtung 2 gibt dabei eine Spannung zwischen V_{H} und V_{H}-VDD aus, und der Ausgangspuffer 7 der Sende- und Empfangseinrichtung 3 gibt eine Spannung zwischen V_{BAT}+VDD und V_{BAT} aus, so daß zwischen den Ausgangsanschlüssen der Ausgangspuffer 2 und 3 stets eine Spannung anliegt, die maximale V_{H}-V_{BAT} und minimal V_{H}-V_{BAT}-2VDD beträgt. Bei entsprechender Dimensionierung von V_{H}, V_{BAT} und VDD können die Anforderungen an die Speisung einer Telefonteilnehmerschleife erfüllt werden.

Jede der beiden Sende- und Empfangseinrichtungen 2, 3 ist ausgangsseitig über einen ersten Widerstand 12, einen Feldeffekttransistor 13 und einen zweiten Widerstand 14 mit einem Anschluß A bzw. B verbunden, welche einer entsprechenden Ader einer zweiadrigen Übertragungsleitung bzw. Telefonteilnehmerschleife zugeordnet ist. Die Sende- und Empfangseinrichtungen 2, 3 geben einerseits jeweils empfangene Signale, welche von den Leitungsadern A, B zur entsprechenden Leitungsabschlußschaltung gerichtet sind, über einen Analog/Digital-Wandler 5 an die Steuereinrichtung 1 aus. Jede Sende- und Empfangseinrichtung 2, 3 weist darüber hinaus ein Echofilter 8 zur Echodämpfung der über die jeweilige Leitungsader A, B empfangenen Signale auf. In umgekehrter Richtung empfangen die Sende- und Empfangseinrichtungen 2, 3 von der Steuereinrichtung 1 digitale Signale, welche über einen Digital/Analog-Wandler 6 und den bereits erwähnten Ausgangspuffer 7 in die entsprechende Ader der Telefon- oder Übertragungsleitung eingekoppelt werden. Die Ausgangspuffer 7 der Sende- und Empfangseinrichtungen 2 und 3 arbeiten gegensinnig im Push-Pull-Betrieb. Die von den Sende- und Empfangseinrichtungen 2, 3 empfangenen Teilsignale bilden das von der Übertragungsleitung empfangene Empfangssignal, und die von den Sende- und Empfangseinrichtungen 2, 3 der entsprechenden Leitungsader A, B eingeprägten Teilsignale bilden das über die Übertragungsleitung zu übertragende Sendesignal, wobei das Sendesignal insbesondere durch die wechselstrommäßige Differenz zwischen den gesendeten Teilsignalen der beiden Sende- und Empfangseinrichtungen 2, 3 gebildet ist.

Die den zuvor beschriebenen Ein- und Ausgangssignalen der Sende- und Empfangseinrichtungen 2, 3 zugeordneten Leitungen sind über Kondensatoren 16 bzw. 17 mit der in Form einer Digitalschaltung ausgestalteten Steuereinrichtung 1 verbunden. Von den Sende- und Empfangseinrichtungen 2, 3 empfangene Signale werden nach der Analog/Digital-Wandlung durch den Analog/Digital-Wandler 5 über den Kondensator 17 und ein Tiefpaßfilter (LP) 18 sowie steuerbare Schalter 19 einem Summationsglied zugeführt, dessen Ausgang mit einem digitalen Signalprozessor (DSP) 20 und, über ein weiteres digitales Tiefpaßfilter 22, mit einer Eingabe/Ausgabe-Steuereinheit 21 verbunden ist. Digitale Sendesignale werden hingegen den Steuer- und Empfangseinrichtungen 2, 3 über die Kondensatoren 16 zugeführt. Die zwischen den Sende- und Empfangseinrichtungen 2, 3 und der Steuereinrichtung 1 vorgesehenen Kondensatoren 16, 17 dienen als galvanische Trennelemente.

Die Steuereinrichtung 1 umfaßt neben den zuvor beschriebenen Elementen zudem einen Leitungscodierer 23 sowie ein mit den Ausgängen des Leitungscodierers 23 und der Eingabe/Ausgabe-Steuereinheit 21 verbundenes Summationsglied. Die Eingabe/Ausgabe-Steuereinheit 21 übergibt ein zu sendendes Signal an den Leitungscodierer 23, der dieses Signal beispielsweise einer 2B1Q-Codierung (d.h. 2 Bit ergeben ein Quaternärsymbol) unterzieht. Dem Summationsglied wird darüber hinaus von der Eingabe/Ausgabe-Steuereinheit 21 ein Signal zugeführt, mit dem die Arbeitspunkte der Bauelemente der Sende- und Empfangseinrichtungen 2, 3 geregelt werden können.

Die Eingabe/Ausgabe-Steuereinheit 21 ist bei dem vorliegenden Ausführungsbeispiel derart ausgestaltet, daß sie insbesondere nach jedem Reset im Rahmen der vorhandenen Ablaufsteuerung automatisch eine Kalibrierung der Sende- und Empfangseinrichtungen 2, 3 durchführt, um deren mit den Leistungsadern A, B verbundene Ausgänge aufeinander zu kalibrieren. Der eigentliche Zweck dieser Kalibrierung besteht darin, Ausgangspegel der beiden Sende- und Empfangseinrichtungen 2, 3 zu erhalten, welche im Rahmen der Meßgenauigkeit weitgehend übereinstimmen.

Daher werden im Rahmen der Kalibrierung die Ausgangspegel der beiden Sende- und Empfangseinrichtungen 2, 3 gemessen, miteinander verglichen und abhängig vom Vergleichsergebnis anschließend derart justiert, daß sie im wesentlichen übereinstimmen. Die Messung der Ausgangspegel erfolgt dabei über die Analog/Digital-Wandler 5 der beiden Sende- und Empfangseinrichtungen 2, 3, welche jedoch fertigungsbedingt unterschiedliche Wandlungs- oder Umsetzverhältnisse aufweisen können. Daher wird vor der eigentlichen Ausgangspegelmessung vorzugsweise zunächst der relative Unterschied zwischen den Umsetzverhältnissen der in den Sende- und Empfangseinrichtungen 2, 3 vorgesehenen Analog/Digital-Wandler 5 bestimmt, um eine somit festgestellte Abweichung nachfolgend bei der Auswertung der Ausgangspegel berücksichtigen zu können, da derartige Abweichungen der Umsetzverhältnisse die gelieferten Ausgangspegel-Meßwerte verfälschen können.

Die Kalibrierung erfolgt daher vorzugsweise in zwei Schritten.

In einem ersten Schritt werden die fertigungsbedingt unterschiedlichen Umsetzverhältnisse der Analog/Digital-Wandler in jedem Chip bzw. in jeder Sende- und Empfangseinrichtung 2, 3 mit hoher Relativ-Genauigkeit bestimmt.

Zu diesem Zweck sendet die Eingabe/Ausgabe-Steuereinheit 21 über die serielle Schnittstelle eine entsprechende Steuerinformation an die beiden Sende- und Empfangseinrichtungen 2, 3, welche von in den Sende- und Empfangseinrichtungen 2, 3 enthaltenen dezentralen Steuereinheiten 4 ausgewertet und in ein Abschaltsignal für die ausgangsseitig vorgesehenen Transistoren 13 umgesetzt wird. Auf diese Weise werden die Transistoren zu Beginn der Kalibrierung hochohmig geschaltet, so daß die Sende- und Empfangseinrichtungen 2,3 von den Leitungsadern A, B getrennt werden, um externe Einflüsse auszuschließen. Bei den beiden Transistoren handelt es sich um Feldeffekttransistoren, welche aus Schutzgründen ohnehin vorhanden sind.

Jeweils zwischen dem Ausgang der Sende- und Empfangseinrichtung 2 bzw. 3 und dem entsprechenden externen Transistor 13 ist ein bereits zuvor erwähnter Widerstand 12 geschaltet, von dem eine sehr hohe Fertigungsgenauigkeit von beispielsweise 0,1% gefordert wird. Die in den Sende- und Empfangseinrichtungen 2, 3 enthaltenen Analog/Digital-Wandler 5 können eingangsseitig über steuerbare Schalter 10, 11, welche durch Transistoren gebildet sein können, mit den beiden Enden des entsprechenden Widerstands 12 oder einer Referenzspannung V_{REF} verbunden werden. Die Ansteuerung der steuerbaren Schalter 10, 11 erfolgt durch die entsprechende Steuereinheit 4 in Kombination mit der zentralen Steuereinrichtung 1.

Zur Kalibrierung werden die steuerbaren Schalter 10, 11 derart geschaltet, daß jedem Analog/Digital-Wandler 5 die an dem entsprechenden Widerstand 12 abfallende Spannung zugeführt wird. Durch weitere steuerbare Schalter 9 werden die mit den externen Transistoren 13 verbundenen Enden der Widerstände 12 wechselstrommäßig über eine Kapazität 15 verbunden. D.h. zwischen den Ausgängen der beiden Sendeeinrichtungen 2, 3, an denen von der Eingabe/Ausgabe-Steuereinheit 21 der Steuereinrichtung 1 während der Kalibrierung ein Wechselsignal angelegt wird, ist eine wechselstrommäßige Verbindung vorhanden. Die in Fig. 1 gezeigten Schaltungsblöcke können insbesondere derart ausgelegt sein, daß mehrere Adernpaare A, B, beispielsweise vier Adernpaare, gemeinsam mit Hilfe des Kondensators 15 kalibriert werden können. In diesem Fall müssen die einzelnen Sende- und Empfangseinrichtungen 2, 3 zur Kalibrierung über die steuerbaren Schalter 9 zeitlich gemultiplext an den Kondensator 15 angeschlossen werden.

Bei der Schaltungsentwicklung muß darauf geachtet werden, daß durch die Serienwiderstände 12 exakt ein identischer Strom fließt, der nicht durch Leckwiderstände oder Leckkapazitäten verfälscht wird. Fließt durch die beiden Serienwiderstände 12 derselbe Strom, fällt an ihnen auch (innerhalb eines bestimmten Toleranzrahmens) dieselbe Spannung ab. Daher wird die an den Widerständen 12 abfallende Spannung über die Schalter 10, 11 den Analog/Digital-Wandlern 5 zugeführt, digitalisiert und über die Tiefpaßfilter 18 und weitere steuerbare Schalter 19 dem digitalen Signalprozessor 20 der Steuereinrichtung 1 zur Auswertung zugeführt. Die steuerbaren Schalter 19 werden von der Eingabe/Ausgabe-Steuereinheit 21 der Steuereinrichtung 1 derart angesteuert, daß durch den digitalen Signalprozessor 20 ein Vergleich der gemessenen und digitalisierten Spannungsamplituden möglich ist, um den relativen Unterschied zwischen den Umsetzverhältnissen der beiden Anaog/Digital-Wandler 5 zu bestimmen. Hat der digitale Signalprozessor 20 eine relative Abweichung zwischen den Umsetzverhältnissen erfaßt, wird diese gespeichert, so daß nachfolgend sämtliche digitalen Meßwerte der Analog/Digital-Wandler 5 um die ermittelte Relation bzw. um die ermittelte relative Abweichung der Umsetzverhältnisse korrigiert werden können. Da die Linearität und die relative Auflösung der Analog/Digital-Wandler 5 bei 70dB (12bit) liegt, können nach diesem Schritt die Ausgangspegel bzw. die an den Ausgangswiderständen 12 abfallenden Spannungen bis zur Genauigkeit der Ausgangswiderstände 12 gemessen und verglichen werden, so daß eine hochgenaue Kalibrierung möglich ist.

Nach diesem ersten Schritt erfolgt in einem zweiten Schritt die eigentliche Kalibrierung. Zu diesem Zweck werden während dieses zweiten Schritts mit den Analog/Digital-Wandlern 5 die an den Widerständen 12 abfallenden Spannungen gemessen und somit die Ausgangspegel der beiden Sende- und Empfangseinrichtungen 2 erfaßt. Auch diese Meßwerte werden über die Kondensatoren 17, Tiefpaßfilter 18 und steuerbare Schalter 19 dem digitalen Signalprozessor 20 und der Eingabe/Ausgabe-Steuereinheit 21 der Steuereinrichtung 1 zugeführt. Die Meßergebnisse werden wiederum von dem digitalen Signalprozessor 20 ausgewertet, so daß abhängig von dem Vergleichsergebnis den beiden Sende- und Empfangseinrichtungen 2, 3 über die serielle Schnittstelle ein Korrekturwert zur Korrektur der entsprechenden Ausgangspegel zugeführt werden kann. Dieser Korrekturwert wird von der entsprechenden Steuereinheit 4 gespeichert und an dem im Signalpfad der entsprechenden Sende- und Empfangseinrichtung vorgesehenen Ausgabepuffer 7 angelegt, um somit jeweils die Referenzspannung für die Verstärkung des entsprechenden Ausgangssignals der Sende- und Empfangseinrichtung 2 bzw. 3 anzupassen, so daß als Ergebnis im Rahmen der Meßtoleranz identische Ausgangspegel der beiden Sende- und Empfangseinrichtungen 2, 3 erhalten werden.

Um die Übereinstimmung der Ausgangspegel weiter zu verbessern, kann insbesondere der zweite Schritt wiederholt ausgeführt werden.

## Patentansprüche

1. Verfahren zum Übertragen eines Sendesignals über eine zweiadrige Leitung,
wobei mit Hilfe entsprechender Sendeeinrichtungen (2, 3) zwei Teilsignale erzeugt und über jeweils eine Ader (A, B) der Leitung übertragen werden, und
wobei das Sendesignal durch die wechselstrommäßige Differenz der beiden Teilsignale gebildet wird,
**dadurch gekennzeichnet,**
**daß** eine Kalibrierung an den mit den Adern (A, B) der Leitung verbundenen Anschlüssen der Sendeeinrichtungen (2, 3) auftretenden Ausgangspegel aufeinander bezogen durchgeführt wird, und
**daß** das Sendesignal nach der Kalibrierung der Ausgangspegel der Sendeeinrichtungen (2, 3) über die Adern (A, B) der Leitung übertragen wird.

2. Verfahren nach Anspruch 1,
**dadurch gekennzeichnet,**
**daß** zur Kalibrierung die Anschlüsse von der entsprechenden Ader (A, B) der Leitung getrennt werden, und
**daß** die Ausgangspegel der Anschlüsse gemessen, verglichen und derart eingestellt werden, daß sie im wesentlichen übereinstimmen.

3. Verfahren nach Anspruch 2,
**dadurch gekennzeichnet,**
**daß** die Ausgangspegel der Anschlüsse jeweils über eine Analog-Digital-Umsetzung gemessen werden, und
**daß** vor der Messung der Ausgangspegel der Anschlüsse ein relativer Unterschied zwischen den beiden Analog-Digital-Umsetzungen erfaßt und bei der nachfolgenden Messung der Ausgangspegel berücksichtig wird.

4. Verfahren nach Anspruch 2 oder 3,
**dadurch gekennzeichnet,**
**daß** die Ausgangspegel der Anschlüsse durch Erfassen des Spannungsabfalls an einem mit dem jeweiligen Anschluß in Serie geschalteten Widerstand (12) gemessen werden.

5. Verfahren nach einem der Ansprüche 2-4,
**dadurch gekennzeichnet,**
**daß** nach dem Messen und Vergleichen der Ausgangspegel der mit den beiden Adern (A, B) verbundenen Anschlüsse der beiden Sendeeinrichtungen (2, 3) abhängig von dem Vergleichsergebnis ein Ausgangspegel-Korrekturwert erzeugt und in einer entsprechenden der Sendeeinrichtungen (2, 3) bei der nachfolgenden Übertragung des entsprechenden Teilsignals berücksichtigt wird.

6. Verfahren nach Anspruch 5,
**dadurch gekennzeichnet,**
**daß** jedes Teilsignal in der entsprechenden Sendeeinrichtung (2, 3) vor der Übertragung über die entsprechende Ader der Leitung verstärkt wird, und
**daß** der Ausgangspegel-Korrekturwert als Korrekturwert für die Referenzspannung bei der Verstärkung des entsprechenden Teilsignals verwendet wird.

7. Verfahren nach einem der Ansprüche 2-6,
**dadurch gekennzeichnet,**
**daß** nach Durchführung der Kalibrierung eine erneute Kalibrierung durchgeführt wird, um die Übereinstimmung der Ausgangspegel der Anschlüsse weiter zu verbessern.

8. Vorrichtung zum Übertragen eines Sendesignals über eine zweiadrige Leitung,
mit einer ersten Sendeeinrichtung (2) zur Übertragung eines ersten Teilsignals über eine erste Ader (A) der Leitung,
mit einer zweiten Sendeeinrichtung (3) zur Übertragung eines zweiten Teilsignals über eine zweite Ader (B) der Leitung, und
mit einer Steuereinrichtung (1) zur Ansteuerung der ersten und zweiten Sendeeinrichtung (2, 3) derart, daß ein gewünschtes Sendesignal in Form der wechselstrommäßigen Differenz zwischen den beiden Teilsignale über die Leitung übertragen wird,
**dadurch gekennzeichnet,**
**daß** Pegelerfassungsmittel (5, 12) zum Messen von Ausgangspegeln der Sendeeinrichtungen (2, 3) vorgesehen sind, und
**daß** die Steuereinrichtung (1) derart ausgestaltet ist, daß sie die von den Pegelerfassungsmitteln (5, 12) gemessenen Ausgangspegel der beiden Sendeeinrichtungen (2, 3) miteinander vergleicht und abhängig von dem Vergleichsergebnis Steuersignale zur Kalibrierung der Sendeeinrichtungen (2, 3) derart erzeugt, daß von den Sendeeinrichtungen (2, 3) im wesentlichen derselbe Ausgangspegel abgegeben wird.

9. Vorrichtung nach Anspruch 8,
**dadurch gekennzeichnet,**
**daß** die Pegelerfassungsmittel Widerstände (12) umfassen,
wobei jeweils zwischen einen Ausgangsanschluß der Sendeeinrichtungen (2, 3) und der entsprechenden Ader (A, B) der Leitung ein Widerstand in Serie geschaltet ist und zum Messen der Ausgangspegel die an den einzelnen Widerständen (12) abfallende Spannung erfaßt wird.

10. Vorrichtung nach Anspruch 8 oder 9,
**dadurch gekennzeichnet,**
**daß** die Pegelerfassungsmittel für jede Sendeeinrichtung (2, 3) einen Analog/Digital-Wandler (5) umfassen, über den der entsprechende Ausgangspegel der Steuereinrichtung (1) zugeführt ist.

11. Vorrichtung nach Anspruch 10,
**dadurch gekennzeichnet,**
**daß** die Steuereinrichtung (1) derart ausgestaltet ist, daß sie vor der Kalibrierung der Sendeeinrichtungen (2, 3) den relativen Unterschied zwischen den Umsetzverhältnissen der den einzelnen Sendeeinrichtungen (2, 3) zugeordneten Analog/Digital-Wandler (5) feststellt, um diesen der nachfolgenden Kalibrierung zugrundezulegen.

12. Vorrichtung nach Anspruch 11,
**dadurch gekennzeichnet,**
**daß** ein Kondensator (15) vorgesehen ist, über den die Steuereinrichtung (1) zur Feststellung des relativen Unterschieds zwischen den Umsetzverhältnissen der Analog/Digital-Wandler (5) die nicht mit dem Ausgangsanschluß der entsprechenden Sendeeinrichtung (2, 3) verbundenen Anschlüsse der Widerstände (12) unter Anlegung eines Wechselsignals an die Ausgangsanschlüsse der Sendeeinrichtungen (2, 3) wechselstrommäßig verbindet, um die an den einzelnen Widerständen (12) in diesem Zustand abfallende Spannung zu vergleichen.

13. Vorrichtung nach Anspruch 12,
**dadurch gekennzeichnet,**
**daß** die Steuereinrichtung (1) derart ausgestaltet ist, daß sie bei der nachfolgenden Messung der Ausgangspegel von den Analog/Digital-Wandler (5) zugeführte Meßwerte um den festgestellten relativen Unterschied zwischen den Umsetzverhältnissen der Analog/Digital-Wandler (5) korrigiert.

14. Vorrichtung nach einem der Ansprüche 9 bis 13,
**dadurch gekennzeichnet,**
**daß** jeweils zwischen den Ausgangsanschluß einer Sendeeinrichtung (2, 3) und der entsprechenden Ader (A, B) der Leitung ein Transistor (13) geschaltet ist, über den die Steuereinrichtung (1) zur Kalibrierung die Sendeeinrichtungen (2, 3) von den Adern (A, B) der Leitung trennt.

15. Vorrichtung nach einem der Ansprüche 8 bis 14,
**dadurch gekennzeichnet,**
**daß** die Steuereinrichtung (1) derart ausgestaltet ist, daß abhängig von dem Vergleichsergebnis zwischen den von den Pegelerfassungsmitteln (5, 12) gemessenen Ausgangspegeln die Steuersignale zur Kalibrierung der Sendeeinrichtungen (2, 3) in Form einer Korrekturwerts erzeugt, welcher von der Steuereinrichtung (1) zur Korrektur des Ausgangspegels einer der Sendeeinrichtungen (2, 3) zugeführt wird.

16. Vorrichtung nach Anspruch 15,
**dadurch gekennzeichnet,**
**daß** jede Sendeeinrichtung (2, 3) Verstärkermittel (7) zur Verstärkung des entsprechenden Teilsignals aufweist, und
**daß** jede Sendeeinrichtung (2, 3) Speichermittel (4) zum Speichern des von der Steuereinrichtung (1) zugeführten Korrekturwerts aufweist, wobei die Steuereinrichtung (1) den Korrekturwert den Verstärkermitteln (7) zur Korrektur eines Referenzspannungswerts der Verstärkermitteln (7) zuführt.

17. Vorrichtung nach einem der Ansprüche 8-16,
**dadurch gekennzeichnet,**
**daß** die beiden Sendeeinrichtungen (2, 3) auf getrennten Chips angeordnet sind.

18. Verwendung einer Vorrichtung nach einem der Ansprüche 8-17 zum Übertragen eines Sendesignals über eine Telefonleitung.

19. Verwendung nach Anspruch 18,
**dadurch gekennzeichnet,**
**daß** die Telefonleitung eine ISDN-Telefonleitung ist.

## Claims

1. A method for transmitting a transmission signal via a two-core line,
in which case, with the aid of corresponding transmission devices (2, 3), two partial signals are generated and are transmitted via a respective core (A, B) of the line, and
in which case the transmission signal is formed by the alternating-current difference between the two partial signals,
**characterized**
**in that** a calibration of output levels in relation to one another is carried out, said output levels occurring at those connections of the transmission devices (2, 3) which are connected to the cores (A, B) of the line, and
**in that**, after the calibration of the output levels of the transmission devices (2, 3), the transmission signal is transmitted via the cores (A, B) of the line.

2. The method as claimed in claim 1,
**characterized**
**in that**, for calibration, the connections are separated from the corresponding core (A, B) of the line, and
**in that** the output levels of the connections are measured, compared and set in such a way that they essentially correspond.

3. The method as claimed in claim 2,
**characterized**
**in that** the output levels of the connections are in each case measured by means of an analog-to-digital conversion, and
**in that**, before the measurement of the output levels of the connections, a relative difference between the two analog-to-digital conversions is detected and taken into account in the subsequent measurement of the output levels.

4. The method as claimed in claim 2 or 3,
**characterized**
**in that** the output levels of the connections are measured by detecting the voltage drop across a resistor (12) connected in series with the respective connection.

5. The method as claimed in one of claims 2-4,
**characterized**
**in that**, after the measurement and comparison of the output levels of those connections of the two transmission devices (2, 3) which are connected to the two cores (A, B) , depending on the comparison result, an output level correction value is generated and taken into account in a corresponding one of the transmission devices (2, 3) during the subsequent transmission of the corresponding partial signal.

6. The method as claimed in claim 5,
**characterized**
**in that** each partial signal is amplified in the corresponding transmission device (2, 3) before transmission via the corresponding core of the line, and
**in that** the output level correction value is used as correction value for the reference voltage in the amplification of the corresponding partial signal.

7. The method as claimed in one of claims 2-6,
**characterized**
**in that**, after the calibration has been carried out, a renewed calibration is carried out in order to further improve the correspondence of the output levels of the connections.

8. An apparatus for transmitting a transmission signal via a two-core line,
having a first transmission device (2) for transmitting a first partial signal via a first core (A) of the line,
having a second transmission device (3) for transmitting a second partial signal via a second core (B) of the line, and
having a control device (1) for driving the first and second transmission devices (2, 3) in such a way that a desired transmission signal is transmitted in the form of the alternating-current difference between the two partial signals via the line,
**characterized**
**in that** level detection means (5, 12) for measuring output levels of the transmission devices (2, 3) are provided, and
**in that** the control device (1) is configured in such a way that it compares the output levels - measured by the level detection means (5, 12) - of the two transmission devices (2, 3) with one another and, depending on the comparison result, generates control signals for calibrating the transmission devices (2, 3) in such a way that essentially the same output level is output by the transmission devices (2, 3).

9. The apparatus as claimed in claim 8,
**characterized**
**in that** the level detection means comprise resistors (12), a resistor being connected in series in each case between an output connection of the transmission devices (2, 3) and the corresponding core (A, B) of the line and, in order to measure the output levels, the voltage dropped across the individual resistors (12) is detected.

10. The apparatus as claimed in claim 8 or 9,
**characterized**
**in that** the level detection means comprise, for each transmission device (2, 3), an analog/digital converter (5), via which the corresponding output level is fed to the control device (1).

11. The apparatus as claimed in claim 10,
**characterized**
**in that** the control device (1) is configured in such a way that, before the calibration of the transmission devices (2, 3), it ascertains the relative difference between the conversion ratios of the analog/digital converters (5) assigned to the individual transmission devices (2, 3), in order to use said difference as a basis for the subsequent calibration.

12. The apparatus as claimed in claim 11,
**characterized**
**in that** a capacitor (15) is provided, via which the control device (1) for ascertaining the relative difference between the conversion ratios of the analog/digital converters (5) connects, in terms of alternating current, those connections of the resistors (12) which are not connected to the output connection of the corresponding transmission device (2, 3), with application of an AC signal to the output connections of the transmission devices (2, 3), in order to compare the voltage dropped across the individual resistors (12) in this state.

13. The apparatus as claimed in claim 12,
**characterized**
**in that** the control device (1) is configured in such a way that, during the subsequent measurement of the output levels, it corrects measured values fed in by the analog/digital converters (5) by the relative difference ascertained between the conversion ratios of the analog/digital converters (5).

14. The apparatus as claimed in one of claims 9 to 13,
**characterized**
**in that** a transistor (13) is in each case connected between the output connection of a transmission device (2, 3) and the corresponding core (A, B) of the line, via which transistor the control device (1), for calibration, separates the transmission devices (2, 3) from the cores (A, B) of the line.

15. The apparatus as claimed in one of claims 8 to 14,
**characterized**
**in that** the control device (1) is configured in such a way that, depending on the comparison result between the output levels measured by the level detection means (5, 12), it generates the control signals for calibrating the transmission devices (2, 3) in the form of a correction value which is fed from the control device (1) for correcting the output level to one of the transmission devices (2, 3).

16. The apparatus as claimed in claim 15,
**characterized**
**in that** each transmission device (2, 3) has amplifier means (7) for amplifying the corresponding partial signal, and
**in that** each transmission device (2, 3) has storage means (4) for storing the correction value fed by the control device (1), the control device (1) feeding the correction value to the amplifier means (7) for the purpose of correcting a reference voltage value of the amplifier means (7).

17. The apparatus as claimed in one of claims 8-16,
**characterized**
**in that** the two transmission devices (2, 3) are arranged on separate chips.

18. The use of an apparatus as claimed in one of claims 8-17 for transmitting a transmission signal via a telephone line.

19. The use as claimed in claim 18,
**characterized**
**in that** the telephone line is an ISDN telephone line.

## Revendications

1. Procédé pour la transmission par l'intermédiaire d'une ligne à deux conducteurs d'un signal émis, moyennant quoi deux signaux partiels sont produits à l'aide de dispositifs émetteurs correspondants (2, 3) et sont transmis chacun par l'intermédiaire d'un conducteur (A, B) de la ligne, et de sorte que le signal émis est formé par une différence de courant alternatif des deux signaux partiels, **caractérisé en ce qu'**un calibrage est effectué sur les niveaux de sortie qui apparaissent avec les connexions des dispositifs émetteurs (2, 3) reliées aux conducteurs (A, B) de la ligne rapportés mutuellement, et **en ce que** le signal émis après calibrage des niveaux de sortie des dispositifs émetteurs (2, 3) est transmis par l'intermédiaire des conducteurs (A, B) de la ligne.

2. Procédé selon la revendication 1, **caractérisé en ce que** pour le calibrage, les connexions des conducteurs (A, B) correspondants de la ligne sont séparées et **en ce que** les niveaux de sortie des connexions sont mesurés, comparés et ajustés de telle sorte qu'ils concordent pour l'essentiel.

3. Procédé selon la revendication 2, **caractérisé en ce que** les niveaux de sortie des connexions sont chacun mesurés par l'intermédiaire d'une conversion analogique-numérique, et **en ce qu'**avant la mesure des niveaux de sortie des connexions, une différence relative entre les deux conversions analogiques-numériques est reconnue et prise en compte lors de la mesure subséquente des niveaux de sortie.

4. Procédé selon la revendication 2 ou 3, **caractérisé en ce que** les niveaux de sortie des connexions sont mesurés par reconnaissance d'une chute de tension sur une résistance (12) connectée en série sur la connexion correspondante.

5. Procédé selon l'une quelconque des revendications 2 à 4, **caractérisé en ce qu'**après la mesure et la comparaison des niveaux de sortie des connexions reliées aux deux conducteurs (A, B) des deux dispositifs émetteurs (2, 3), une valeur de correction du niveau de sortie est produite en fonction du résultat de la comparaison et est prise en compte dans l'un correspondant des dispositifs émetteurs (2, 3) lors de la transmission subséquente du signal partiel correspondant.

6. Procédé selon la revendication 5, **caractérisé en ce qu'**avant la transmission, chaque signal partiel est amplifié dans le dispositif émetteur correspondant (2, 3) par l'intermédiaire du conducteur correspondant de la ligne, et **en ce que** la valeur de correction du niveau de sortie est utilisée comme valeur de correction pour la tension de référence lors de l'amplification du signal partiel correspondant.

7. Procédé selon l'une quelconque des revendications 2 à 6, **caractérisé en ce qu'**après l'exécution du calibrage, un nouveau calibrage est effectué afin d'améliorer la concordance des niveaux de sortie des connexions.

8. Dispositif pour la transmission d'un signal émis par l'intermédiaire d'une ligne à deux conducteurs, avec un premier dispositif émetteur (2) pour la transmission d'un premier signal partiel par l'intermédiaire d'un premier conducteur (A) de la ligne, avec un second dispositif émetteur (3) pour la transmission d'un second signal partiel par l'intermédiaire d'un second conducteur (B) de la ligne, et avec une unité de commande (1) pour commander le premier et le second dispositif émetteur (2, 3) de telle sorte qu'un signal émis souhaité soit transmis par l'intermédiaire de la ligne sous la forme de la différence de courant alternatif entre les deux signaux partiels, **caractérisé en ce que** des moyens de reconnaissance de niveau (5, 12) pour mesurer les niveaux de sortie des dispositifs émetteurs (2, 3) sont prévus, et **en ce que** le dispositif de commande (1) est réalisé de telle sorte qu'il compare conjointement les niveaux de sortie des deux dispositifs émetteurs (2, 3) mesurés par les moyens de reconnaissance de niveau (5, 12) et, en fonction du résultat de la comparaison, produit des signaux de commande pour le calibrage des dispositifs émetteurs (2, 3) de telle sorte que pour l'essentiel, le même niveau de sortie soit émis par les deux dispositifs émetteurs (2, 3).

9. Dispositif selon la revendication 8, **caractérisé en ce que** les moyens de reconnaissance de niveau (12) comprennent des résistances, de sorte que, entre chaque connexion de sortie des dispositifs émetteurs (2, 3) et le conducteur correspondant (A, B) de la ligne, une résistance est connectée en série et la tension en chute des résistances séparées (12) est mesurée pour la mesure du niveau de sortie.

10. Dispositif selon la revendication 8 ou 9, **caractérisé en ce que** les moyens de reconnaissance du niveau pour chaque dispositif émetteur (2, 3) comprennent un convertisseur analogique-numérique (5) par l'intermédiaire duquel le niveau de sortie correspondant est amené au dispositif de commande (1).

11. Dispositif selon la revendication 10, **caractérisé en ce que** le dispositif de commande (1) est réalisé de telle sorte qu'avant le calibrage des dispositifs émetteurs (2, 3), il établisse la différence relative entre les relations de conversion des convertisseurs analogiques-numériques (5) isolés assignés aux dispositifs émetteurs (2, 3) afin de fonder dessus le calibrage ultérieur.

12. Dispositif selon la revendication 11, **caractérisé en ce que** pour déterminer la différence relative entre les relations de conversion des convertisseurs analogiques-numériques (5), un condensateur (15) est prévu par l'intermédiaire duquel le dispositif de commande (1) relie les connexions des résistances (12) qui ne sont pas reliées à la connexion de sortie du dispositif émetteur (2, 3) correspondant en appliquant un signal de modulation aux connexions de sortie des dispositifs émetteurs (2, 3) afin de comparer sur les résistances séparées (12) la tension en chute dans cet état.

13. Dispositif selon la revendication 12, **caractérisé en ce que** le dispositif de commande (1) est réalisé de telle sorte qu'il corrige des valeurs de mesure amenées par les convertisseurs analogiques-numériques (5) de l'ordre de la différence relative constatée entre les relations de conversion des convertisseurs analogiques-numériques (5) lors de la mesure subséquente du niveau de sortie.

14. Dispositif selon l'une quelconque des revendications 9 à 13, **caractérisé en ce qu'**entre chaque connexion de sortie d'un dispositif émetteur (2, 3) et le conducteur (A, B) correspondant de la ligne, un transistor (13) est connecté par l'intermédiaire duquel le dispositif de commande (1) sépare les dispositifs émetteurs (2, 3) des conducteurs (A, B) pour le calibrage.

15. Dispositif selon l'une quelconque des revendications 8 à 14, **caractérisé en ce que** le dispositif de commande (1) est réalisé de telle sorte qu'il produise, pour le calibrage des dispositifs émetteurs (2, 3), les signaux de commande sous la forme d'une valeur de correction en fonction du résultat de comparaison entre les niveaux de sortie mesurés par les moyens de reconnaissance de niveau (5, 12), valeur qui est amenée par le dispositif de commande (1) à un des dispositifs émetteurs (2, 3) pour la correction du niveau de sortie.

16. Dispositif selon la revendication 15, **caractérisé en ce que** chaque dispositif émetteur (2, 3) présente des moyens d'amplification (7) pour l'amplification du signal partiel correspondant, et **en ce que** chaque dispositif émetteur (2, 3) présente des moyens de mémoire (4) pour enregistrer la valeur de correction amenée par le dispositif de commande (1), de sorte que le dispositif de commande (1) conduit la valeur de correction vers les moyens d'amplification (7) pour la correction d'une valeur de tension de référence des moyens d'amplification (7).

17. Dispositif selon l'une quelconque des revendications 8 à 16, **caractérisé en ce que** les deux dispositifs émetteurs (2, 3) sont disposés sur des puces séparées.

18. Utilisation d'un dispositif selon l'une quelconque des revendications 8 à 17 pour la transmission d'un signal émis sur une ligne téléphonique.

19. Utilisation selon la revendication 18, **caractérisée en ce que** la ligne téléphonique est une ligne téléphonique RNIS.
